# EUROPEAN PATENT APPLICATION

(11) **EP 2 759 199 A1**
(43) Date of publication of application: **30.07.2014**
(21) Application number: 13152865.5
(22) Date of filing: 28.01.2013
(51) Int. Cl.: A01N 33/04, A01N 49/00, A01P 1/00

(54) **A method of providing antimicrobial action and a synergistic antimicrobial composition thereof**

(71) Applicant: Unilever N.V., 3013 AL Rotterdam (NL)
(72) Inventor: Bandyopadhyay, Punam, Whitefield, Bangalore 560 066 (IN); Jha, Sujeetkumar, Whitefield, Bangalore 560 066 (IN); Saji, Maya, Treesa, Whitefield, Bangalore 560 066 (IN)
(74) Representative: Rosen Jacobson, Frans Lucas M.

(57) **Abstract**

The present invention relates to a method of providing fast antimicrobial activity through use of specific alkyl tyramine and to a synergistic antimicrobial composition, particularly to a wash-off composition for personal care or household care which additionally comprises actives of natural origin.

## Description

### FIELD OF INVENTION

The present invention relates to a method of providing fast antimicrobial activity through use of a specific antimicrobial active and to a synergistic antimicrobial composition, particularly to a wash-off composition for personal care or household care which comprises actives of natural origin.

### BACKGROUND AND PRIOR ART

Any discussion of the prior art throughout the specification should in no way be considered as an admission that such prior art is widely known or forms part of the common general knowledge in the field.

There are several types of microorganisms, such as bacteria, virus and molds, present in the atmosphere, some of which prefer to live and multiply on human skin. Some of these organisms that reside on human skin, cause undesirable conditions such as body odor, pimples and acne, which are cosmetically un-acceptable to people. These conditions are further aggravated by hot and humid climatic conditions. One way to get rid of these microorganisms residing on the skin is to wash them off, while having bath or while washing hands, preferably using a washing composition, such as soap. It is preferred that such compositions comprise fast acting antimicrobial actives that work in the time frame that people often take to do the washing action e.g. of the order of less than two minutes or so.

To provide antibacterial germicides or antibacterial agents such as triclosan (i.e., 2,4,4'-trichloro-2'-hydroxydiphenylether; TCN) and triclocarbanilide; TCC are known and have been used. However, these actives are not very fast acting and so although effective in leave on compositions, are not as effective in wash off compositions. Antimicrobial compositions comprising combinations of essential oil actives, based on which soaps have been are prepared, are also known and one such composition is claimed in WO2010046238.

The present inventors have surprisingly found that it is possible to provide fast antimicrobial activity by including a specific class of alkyl tyramine in a wash off composition. Alkyl tyramine has been reported to have antimicrobial activity (http://www.aapsj.org/abstracts/AM_2000/2984.htm) but it has not been reported to have fast antimicrobial activity.

Further the present inventors have found synergistic activity of this class of compound with other actives of natural origin.

It is thus an object of the present invention to provide effective antimicrobial activity from wash off compositions in fast time scales.

It is another object of the present invention to provide a synergistic combination of antimicrobial ingredients.

It is yet another object of the present invention to provide a wash off composition comprising ingredients, which are readily available and can be easily incorporated in the composition thereby keeping costs low.

It is yet another object of the present invention to provide a wash off composition where consumer preferred actives of natural origin e.g. essential oil active are included at low concentrations thereby maintaining the sensorial properties of these consumer products.

### SUMMARY OF THE INVENTION

The present invention relates to a method of providing antimicrobial effect on a substrate comprising the steps of:
a) Applying a composition comprising alkyl tyramine having the following structure 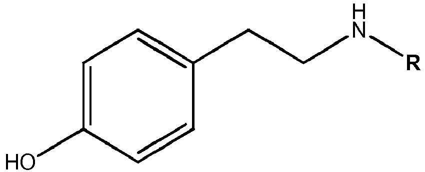 Where R is a C₈ to C₁₂ alkyl chain
   on to said substrate; and
b) rinsing said substrate with a suitable solvent or wiping said substrate with a suitable wipe, from about 15 seconds to about two minutes after commencement of step (a).

According to a preferred aspect of the present invention there is provided a wash-off composition comprising
(a) 0.1 to 10% alkyl tyramine of the structure 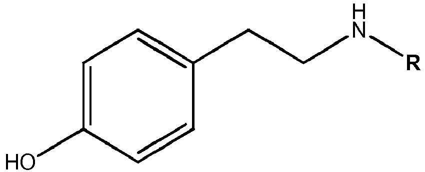 Where R is a C₈ to C₁₂ alkyl chain; and
(b) 1 - 80% surfactant.

According to yet another aspect of the invention there is provided a synergistic antimicrobial composition comprising
(a) 0.1 to 10% alkyl tyramine of the structure 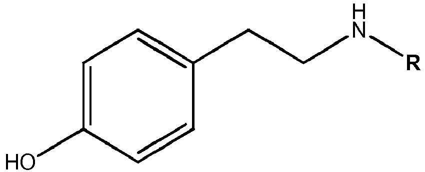 Where R is a C₈ to C₁₂ alkyl chain; and
(b) 0.01 to 2% of an essential oil active chosen from terpineol, thymol, geraniol, eugenol, linalool or nerol and mixtures thereof.

### DETAILED DESCRIPTION OF THE INVENTION

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of". In other words, the listed steps or options need not be exhaustive. It is noted that the examples given in the description below are intended to clarify the invention and are not intended to limit the invention to those examples per se. Similarly, all percentages are weight/weight percentages unless otherwise indicated.

Except in the operating and comparative examples, or where otherwise explicitly indicated, all numbers in this description indicating amounts of material or conditions of reaction, physical properties of materials and/or use are to be understood as modified by the word "about". Unless specified otherwise, numerical ranges expressed in the format "from x to y" are understood to include x and y. When for a specific feature multiple preferred ranges are described in the format "from x to y", it is understood that all ranges combining the different endpoints are also contemplated.

Throughout this description, the term 'providing antimicrobial effect' refers to reduction of the number of viable microorganisms in a given medium or on a given surface by physical or chemical means. Typically, this involves disinfection which is the destruction or inactivation of said microorganisms. Both animate and inanimate media and surfaces are contemplated.

The method of disinfecting the surface and the antimicrobial composition and the various components thereof are described below. The compositions of the present invention are preferred for non-therapeutic use, and more particularly preferred for use in cleaning surfaces of human body including skin, hair or oral cavity or for hard surface cleaning applications.
The method of the invention may be enabled by formulating a personal cleaning composition. By a personal cleaning composition as used herein, is meant to include a composition for cleaning and disinfecting topical areas e.g. skin and/or hair of mammals, especially humans. Such a composition is generally a rinse off product and includes any product applied to a human body for also improving appearance, cleansing, odor control or general aesthetics. The composition of the present invention may be in the form of a powder, bar, liquid, a lotion, cream, foam or gel, or toner, or applied with an implement or via a face mask, pad or patch. "Skin" as used herein is meant to include skin on the face and body (e.g., neck, chest, back, arms, underarms, hands, legs, buttocks and scalp). The composition of the invention is also of relevance to applications on any other external surface of the human body other than skin e.g. hair where products may be formulated with specific aim of providing disinfection and cleaning.

The method of the present invention may also be enabled by way of formulating a composition to cleanse and disinfect hard surfaces. Such compositions can be used for disinfecting and cleaning hard surfaces like floors, walls, windows, doors, furniture, and table tops in various indoor and outdoor locations. Toilets and bathrooms are other places where germs proliferate and disinfection and cleaning compositions of the present invention may be used. Other types of hard surfaces that are cleaned by such compositions include utensils and other articles found in households, offices and other public places. Two of the popular classes of disinfecting/sanitizing actives for such uses are (i) bleaches and (ii) phenolics. Halogen and active oxygen are two most effective bleaches. Bleaches are compounds that liberate oxidising agents like chlorine, bromine, fluorine, nascent oxygen or other oxidizing agents that break the cell walls of microbes like bacteria and virus thereby disinfecting the surfaces thus treated. However, such bleaches are considered harsh on the skin of the person using the same and so there is a need to look for milder yet equally if not better actives, which the present invention provides.

The present invention may also be enabled by way of formulating a composition for oral care. Thus the present invention may be formulated as a mouthwash, a toothpaste or a toothpowder.

The invention provides for a method of providing antimicrobial effect on a substrate comprising the steps of applying a composition comprising alkyl tyramine of C8 to C12 alkyl chain on to said substrate; and rinsing the substrate with a suitable solvent or wiping the substrate with a suitable wipe, from about 15 seconds to about two minutes after the step of applying the composition. The alkyl tyramine preferably has an alkyl chain length of 9 to 12. The solvent for rinsing the surface is preferably water but could also be a mixture of water and alcohol. The word rinsing herein includes the act of wiping the surface with a suitable wipe. Thus the surface e.g. hand, face, body, oral cavity or any hard surface e.g. a utensil is first contacted with the composition of the invention. It is then rinsed preferably with sufficient amounts of water after a pre-determined period of time to remove any visible or sensory reside of the composition. Alternately an alcohol wipe or a water/alcohol impregnated wipe may be used to wipe the surface to be visibly free of the anti-microbial composition. The step of rinsing or wiping the substrate is preferably carried out less than one minute, preferably less than 30 seconds after the step of applying the composition on the substrate.

According to another aspect of the present invention there is provided a method of cleaning and disinfecting a hard surface comprising applying to said hard surface a composition of the invention diluted with water in a weight ratio of 1: 20 to 1: 200, preferably in a ratio of 1:40 to 1:80.

The composition used in the method of the present invention preferably comprises 0.1 to 10% alkyl tyramine and a carrier. The carrier preferably comprises water i.e. the composition is preferably an aqueous composition. The carrier preferably comprises a surfactant preferably from 1 to 80% by weight of the composition. The present invention also provides for a method where the composition that is applied on to the desired substrate additionally comprises an essential oil active. The essential oil active is preferably chosen from terpineol, thymol, geraniol, eugenol, linalool or nerol. Such essential oil active is preferably included in 0.01 to 2% by weight of the composition.

The invention also provides for a wash-off composition comprising 0.1 to 10% alkyl tyramine and 1 - 80% surfactant. The surfactant is preferably a soap, an alkyl sulphate or a linear alkyl benzene sulphonate.

A particularly preferred surfactant is soap. Soap is a suitable surfactant for personal washing applications of the antimicrobial composition of the invention. The soap is preferably C8-C24 soap, more preferably C10-C20 soap and most preferably C12-C16 soap. The cation of the soap can be alkali metal, alkaline earth metal or ammonium. Preferably, the cation of the soap is selected from sodium, potassium or ammonium. More preferably the cation of the soap is sodium or potassium.

The soap may be obtained by saponifying a fat and/or a fatty acid. The fats or oils generally used in soap manufacture may be such as tallow, tallow stearines, palm oil, palm stearines, soya bean oil, fish oil, castor oil, rice bran oil, sunflower oil, coconut oil, babassu oil, palm kernel oil, and others. In the above process the fatty acids are derived from oils/fats selected from coconut, rice bran, groundnut, tallow, palm, palm kernel, cotton seed, soyabean, castor etc. The fatty acid soaps can also be synthetically prepared (e.g. by the oxidation of petroleum or by the hydrogenation of carbon monoxide by the Fischer-Tropsch process). Resin acids, such as those present in tall oil, may be used. Naphthenic acids are also suitable.

The soap, when present in solid forms of the present invention, is present in an amount of 30 to 90%, preferably from 50 to 85%, more preferably 55 to 75% by weight of the composition. The soap, when present in liquid forms of the composition is present in 0.5 to 20%, preferably from 1 to 10% by weight of the composition.

The antimicrobial composition of the invention is useful in hard surface cleaning applications. In such applications preferred surfactants are nonionic surfactants, such as C8-C22, preferably C8-C16 fatty alcohol ethoxylates, comprising between 1 and 8 ethylene oxide groups when the product is in the liquid form. When the product is in the solid form for hard surface cleaning applications surfactants are preferably selected from primary alkyl sulphate, secondary alkyl sulphonates, alkyl benzene sulphonates, or ethoxylated alkyl sulphates. The composition may further comprise an anionic surfactant, such as alkyl ether sulphate preferably those having between 1 and 3 ethylene oxide groups, either from natural or synthetic source and/or sulphonic acid. Especially preferred are sodium lauryl ether sulphates. Alkyl polyglucoside may also be present in the composition, preferably those having a carbon chain length between C6 and C16. Suitable surfactant concentrations in liquid forms of hard surface cleaning application are generally from about from 0.5 to 10%, preferably from 1 to 5 % by weight of the composition. In solid compositions, surfactant is preferably present in 5 to 40%, preferably from 10 to 30% by weight of the composition.

The antimicrobial composition of the invention is useful in oral care compositions e.g. in a dentifrice/toothpaste or oral rinse product. In such applications, preferred surfactants are anionic, nonionic or amphoteric in nature, preferably anionic or amphoteric. Anionic surfactant is preferably an alkali metal alkyl sulphate, more preferably a sodium lauryl sulphate (SLS). Mixtures of anionic surfactants may also be employed. The amphoteric surfactant is preferably a betaine, more preferably an alkylamidopropyl betaine (wherein the alkyl group is a linear C10∼C18 chain), and most preferably is cocoamidopropyl betaine (CAPB). Mixtures of amphoteric surfactants may also be employed. Suitable surfactant concentrations in oral care application are generally from about 2% to about 15%, preferably from about 2.2% to about 10%, more preferably from about 2.5 to about 5% by weight of the total composition.

The present invention is more particularly useful in skin and hair care and in household care applications.

Although there has been a suggestion in the prior art that alkyl tyramine with longer chain length possesses antimicrobial activity, it is the present inventors who have determined that the claimed alkyl tyramine provides the fast antimicrobial kinetic action which is especially important in a wash off processes where the contact time of the antimicrobial actives with the surface is low, i.e. of the order of less than about 2 minutes. Fortuitously such wash off processes include a surfactant for the cleaning action.

Yet another aspect of the present invention provides for a synergistic antimicrobial composition comprising 0.1 to 10% alkyl tyramine of C8 to C12 alkyl chain and 0.01 to 2% of an essential oil active chosen from terpineol, thymol, geraniol, eugenol, linalool or nerol.

### Thymol

The structure of thymol is given below:

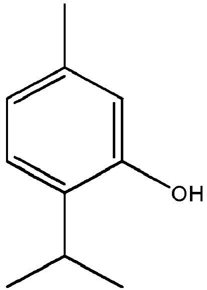

The composition of the invention comprises preferably 0.01 to 2%, more preferably 0.01 to 1%, further more preferably 0.01 to 0.4%, by weight thymol. Thymol may be added to the composition in purified form. Alternatively, thyme oil or thyme extract comprising thymol may be added to the composition, while ensuring that thymol is present in the desired concentration in the composition of the present invention. Thyme oil or thyme extract is obtained from the thyme plant. Thyme plant refers to a plant belonging be genus *Thymus* and includes but is not limited to the following species: *Thymus vulgaris, Thymus zygis, Thymus satureoides, Thymus mastichina, Thymus broussonetti, Thymus maroccanus, Thymus pallidus, Thymus algeriensis, Thymus serpyllum, Thymus pulegoide,* and *Thymus citriodorus.*

### Terpineol

The structure of a terpineol compound is given below:

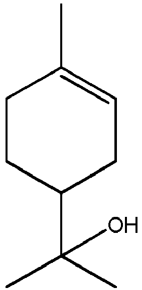

The terpineol is preferably selected from alpha-terpineol, beta-terpineol, gamma-terpineol or mixtures thereof. It is particularly preferred that the terpineol is alpha-terpineol. Terpineol may be added to the antibacterial composition in purified form. Alternatively pine oil comprising terpineol may be added to the antibacterial composition while ensuring that terpineol is present in the desired concentration in the composition of the present invention. The composition preferably comprises 0.01 to 2%, more preferably 0.02 to 1%, further more preferably 0.03 to 1%, and even more preferably 0.04 to 0.6% by weight terpineol.

### Eugenol

Eugenol is an allyl chain-substituted guaiacol. It is generally extracted from certain spices like clove or cinnamon. Eugenol has been used as a perfumery component, in preparing flavors, as an antiseptic or as a local anesthetic. The composition of the invention preferably comprises 0.01 to 2%, preferably 0.02 to 1%, more preferably 0.03 to 0.4%, by weight eugenol.

Eugenol has the structure:

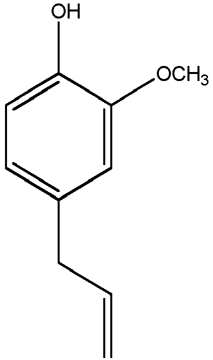

### Geraniol

The structure of the geraniol compound is given below:

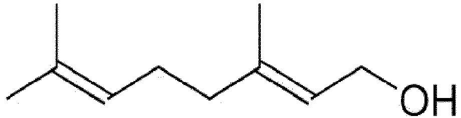

Geraniol is a monoterpenoid and an aliphatic alcohol. It is the primary component of rose oil, palmrosa oil and citronella oil. It has a rose- -like odor and is commonly used in perfumes. The composition of the invention preferably comprises 0.01 to 2%, preferably 0.02 to 1%, more preferably 0.03 to 0.4%, by weight geraniol.

### Linalool

The structure of Linalool is given below:

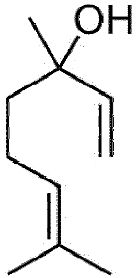

Linalool is a naturally occurring terpene alcohol found in many flowers and spice plants. It has other names such as β-linalool, linalyl alcohol, linaloyl oxide, *p*-linalool, allo-ocimenol, and 2,6-dimethyl-2,7-octadien-6-ol. Linalool is used as a scent in 60-80% of perfumed hygiene products and cleaning agents including soaps, detergents, shampoos, lotions and also used in insect repellent products. The composition of the invention preferably comprises 0.01 to 2%, preferably 0.02 to 1%, more preferably 0.03 to 0.4%, by weight linalool.

### Nerol

The structure of Nerol is given below:

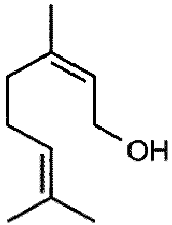

Nerol is a monoterpene found in many essential oils such as lemon grass and hops. It was originally isolated from neroli oil. This colourless liquid is used in perfumery. Like geraniol, nerol has a sweet rose odor and it is isomeric with geraniol, wherein the double bond is trans. The composition of the invention preferably comprises 0.01 to 2%, preferably 0.02 to 1%, more preferably 0.03 to 0.4%, by weight nerol.

According to a preferred aspect of the present invention when an essential oil active is included it is preferably selected from terpineol, thymol, eugenol or mixtures thereof. More preferably the essential oil active is terpineol, thymol or a mixture thereof. Most preferably the antimicrobial essential oil active, when included is a mixture of terpineol and thymol.

An especially preferred aspect provides for higher than 0.05 and lesser than 0.3% by weight thymol; and higher than 0.05 and lesser than 1% by weight terpineol.

The composition may further comprise various additional ingredients known to a person skilled in the art. Such additional ingredients include but are not limited to: perfumes, pigments, preservatives, emollients, sunscreens, emulsifiers, gelling agents, or thickening agents.

The synergistic activity of the composition of the invention provides sufficient antimicrobial efficacy necessary for cleaning and disinfecting the surfaces of interest. Thus, other well known strong antimicrobial actives like low molecular weight (C₂ to C₄) alcohols or bleaches (of chlorine or peroxygen types) are not essential for obtaining the desired activity from the composition. However, they may be present in small amounts preferably less than 2%, more preferably less than 1%, further more preferably less than 0.5% and even further more preferably less than 0.1% and optimally absent from the composition.

The composition of the invention is effective over a wide range of pH preferably in the range of 3.5 to 10.5.

The method of the invention is made effective by formulating a composition of the invention in a suitable carrier. Water is a preferred carrier. Water may preferably be present in 10 to 90% by weight of the composition depending on the format of the composition. In solid composition water may be present in 10-30%, while in liquid or semi-solid composition, water may be present in 40 to 90%.

The invention will now be illustrated with the help of the following non-limiting examples.

### EXAMPLES

### Examples 1-7: Antimicrobial efficacy of various alkyl tyramines as compared to tyramine and a conventional antimicrobial (tri chloro carbanilide)

The antimicrobial efficacy of various actives was tested used the following procedure.

### Test solutions

Different test solutions of actives (tyramine or alkyl tyramines) were first dissolved in 200µl of DMSO (Dimethyl sulfoxide) at different concentrations as indicated in the examples. These samples were then added to 9ml of sterile MQ water, vortexed and kept for 15 min (for maturation) prior to the assay. In the case of essential oil actives, a stock of 50% was prepared in ethanol and then diluted in 9 ml water as per the concentrations indicated in the examples.

### Test bacteria:

*S.aureus* ATCC 6538
*E.coli* ATCC 10536

### Protocol:

The anti-bacterial benefit discussed in the invention was demonstrated in by the standard test method BS EN 1040 modified to suit the specific time point (30 second contact time) as given below.

The test bacteria was grown overnight at 37°C on TSA (a.k.a. Tryptic Soy Agar; commonly used in the art) plate. The grown colonies were re-suspended in 0.85% saline solution. The culture cell density was adjusted to get the final count of about 1*10⁸ cfu/ml (0.8 optical density at 620nm). 1ml of the test culture was added to 9ml of prepared test solution. After 30 second contact time, 1ml of the above mixture was immediately neutralized in 9 ml of D/E broth. This was again serially diluted in D/E broth and plated on TSA in duplicates. In case of the control, 1 ml of test culture was added to 9 ml of saline and was serially diluted and plated on TSA. After solidification, the plates were incubated at 37°C for 48 hrs and the residual colonies were counted. All the antimicrobial experiments were performed under aseptic condition under laminar air flow and all the agar media and D/E dilution tubes were autoclaved (15 psig, 121 deg C, 15-20 min) prior to the assay.

The actives as shown in Table - 1 were tested using the above protocol and the data on log reduction of the bacteria S. *aureus* (control value of 7.2 log) is summarised in Table - 1

**Table - 1**

| Example | Active, (wt%) | Log reduction |
|---|---|---|
| 1 | Tyramine (0.25%) | 0 |
| 1A | Tyramine (0.5%) | 0 |
| 2 | C5 Tyramine (0.25%) | 0.3 |
| 2A | C5 Tyramine (0.5%) | 0.4 |
| 3 | C6 Tyramine (0.25%) | 0.6 |
| 3A | C6 Tyramine (0.5%) | 0.9 |
| 4 | C9 Tyramine (0.25%) | 5.4 |
| 4A | C9 Tyramine (0.5%) | 7.2 |
| 5 | C12 Tyramine (0.25%) | 7.2 |
| 5A | C12Tyramine (0.5%) | 7.2 |
| 6 | TCC (0.5%) | 0.2 |

In the table above, a log reduction of 0 indicates that there was no visible reduction in the amount of bacteria after being treated with the antimicrobial active.

The data in Table -1 above indicates that there is a selective range of alkyl tyramines (Examples 4, 4A, 5, 5A) which demonstrate antimicrobial activity while lower alkyl tyramines or tyramine or a traditional antimicrobial (Examples 1, 1A, 2, 2A, 3, 3A and 6) do not demonstrate this fast kinetics of antimicrobial action (in 30 seconds) against *S*. *aureus.*

### Examples 7 to 11: Antimicrobial activity against E.coli

Several actives were tested against another bacteria *E.coli* ATCC 10536 using a procedure similar to what was used in Examples 1 to 6. The data on the log reduction of bacteria is summarised in Table - 2 below.

**Table - 2**

| Example | Active, (wt%) | Log reduction |
|---|---|---|
| 7 | Tyramine (0.25%) | 0 |
| 7A | Tyramine (0.5%) | 0 |
| 8 | C9 Tyramine (0.25%) | 2.8 |
| 8A | C9 Tyramine (0.5%) | 3.0 |
| 9 | C12 Tyramine (0.25%) | 3.1 |
| 9A | C12 Tyramine (0.5%) | 3.1 |
| 10 | Triclosan (0.3%) | 0.6 |
| 11 | TCC (0.5%) | 0.1 |

The data in Table - 2 above indicates that similar activity is observed against *E.coli.*

### Examples 12 to 21: Synergistic antimicrobial activity of alkyl tyramine with essential oil actives

Several actives were tested for synergistic action against S. *aureus* using a procedure similar to what was used in Examples 1 to 6. The data on the log reduction of bacteria is summarised in Table - 3 below.

**Table - 3**

| Example | Active, (wt%) | Log reduction |
|---|---|---|
| 12 | 0.1% C12-Tyramine | 0.8 |
| 13 | 0.08% Thymol | 1.5 |
| 14 | 0.08% Terpineol | 0.1 |
| 15 | 0.08% Eugenol | 0.2 |
| 16 | 0.08% Geraniol | 0.1 |
| 17 | 0.1% C12-Tyramine + 0.08% thymol | 2.4 |
| 18 | 0.1% C12-Tyramine + 0.08% terpineol | 1.3 |
| 19 | 0.1% C12-Tyramine + 0.08% eugenol | 2.4 |
| 20 | 0.1% C12-Tyramine + 0.08% geraniol | 2.1 |
| 21 | 0.1% C12-Tyramine + 0.08% nerol | 2.2 |

The data in Table - 3 above indicates that alkyl tyramine as claimed in the invention shows synergistic activity with essential oil actives.

### Examples 22 to 24: Synergistic activity of the alkyl tyramine with combination of thymol and terpineol

Experiments similar to the ones in Table - 3 above were carried out with a combination of two essential oil actives thymol and terpineol and the antimicrobial activity data is summarised in Table - 4.

**Table- 4**

| Example | Active, (wt%) | Log reduction |
|---|---|---|
| 22 | 0.1% C12-Tyramine | 4.6 |
| 23 | 0.02% Thymol + 0.06% terpineol | 0.1 |
| 24 | 0.1% C12 tyramine + 0.02% Thymol + 0.06% terpineol | 7.2 |

The data in Table 4 above indicates that a combination of thymol and terpineol interacts synergistically with higher chain length alkyl tyramine to provide antimicrobial benefits.

## Claims

1. A method of providing antimicrobial effect on a substrate comprising the steps of :
a) Applying a composition comprising alkyl tyramine having the following structure 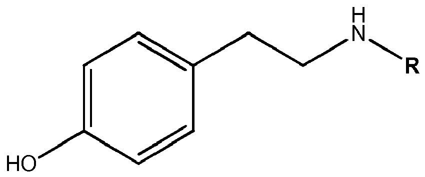 where R is a C₈ to C₁₂ alkyl chain
on to said substrate; and
b) rinsing said substrate with a suitable solvent or wiping said substrate with a suitable wipe, from about 15 seconds to about two minutes after commencement of step (a).

2. A method as claimed in claim 1 wherein said composition comprises (i) 0.1 to 10% by weight of alkyl tyramine; and (ii) a carrier.

3. A method as claimed in claim 1 or 2 wherein said carrier comprises 1 to 80% of surfactant by weight of the composition.

4. A method as claimed in any one of the preceding claims wherein said carrier comprises water.

5. A method as claimed in any one of the preceding claims wherein said composition additionally comprises 0.01 to 2% of an essential oil active chosen from terpineol, thymol, geraniol, eugenol, linalool or nerol, and mixtures thereof.

6. A wash-off composition comprising
(a) 0.1 to 10% alkyl tyramine of the structure 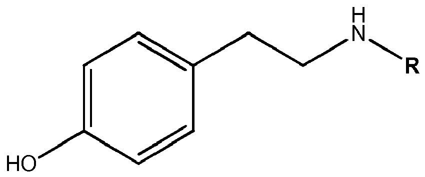 where R is a C₈ to C₁₂ alkyl chain; and
(b) 1 to 80% by weight of surfactant.

7. A composition as claimed in claim 6 wherein said surfactant is a soap, an alkyl sulphate or a linear alkyl benzene sulphonate.

8. A synergistic antimicrobial composition comprising
(a) 0.1 to 10% alkyl tyramine of the structure 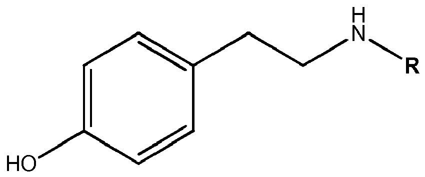 where R is a C₈ to C₁₂ alkyl chain; and
(b) 0.01 to 2% of an essential oil active chosen from terpineol, thymol, geraniol, eugenol, linalool or nerol or mixtures thereof.

9. A composition as claimed in claim 8 wherein said essential oil active is selected from terpineol, thymol, eugenol or mixtures thereof.

10. A composition as claimed in claim 8 or 9 wherein said antimicrobial active is a mixture of terpineol and thymol.

11. A composition as claimed in claim 10 comprising higher than 0.05 and lesser than 0.3% by weight thymol; and higher than 0.05 and lesser than 1% by weight terpineol.
